# EUROPÄISCHE PATENTSCHRIFT

(11) **EP 1 578 293 B1**
(45) Veröffentlichungstag und Bekanntmachung des Hinweises auf die Patenterteilung: **10.12.2008**
(21) Anmeldenummer: 03810836.1
(22) Anmeldetag: 16.12.2003
(51) Int. Cl.: A61C 1/18, F16C 33/20, F16C 33/66, F16H 57/04

(54) **ZAHNÄRZTLICHES HANDINSTRUMENT MIT ZUEINANDER BEWEGTEN BAUTEILEN**
DENTAL HAND INSTRUMENT COMPRISING COMPONENTS WHICH CAN BE DISPLACED IN RELATION TO EACH OTHER
INSTRUMENT DENTAIRE A MAIN COMPRENANT DES COMPOSANTS MOBILES LES UNS PAR RAPPORT AUX AUTRES

(30) Priorität: 16.12.2002 DE 10259012
(43) Veröffentlichungstag der Anmeldung: 28.09.2005
(73) Patentinhaber: Sirona Dental Systems GmbH, 64625 Bensheim (DE)
(72) Erfinder: BIERBAUM, Thomas, 64625 Bensheim (DE); WORSCHISCHEK, Rainer, 64653 Lorsch (DE)
(74) Vertreter: Sommer, Peter
(86) Internationale Anmeldenummer: PCT/DE2003/004146
(87) Internationale Veröffentlichungsnummer: WO 2004/056280

(56) Entgegenhaltungen:
- WO-A-01/01879
- US-A- 5 647 745
- US-A- 6 158 893
- US-A1- 2002 142 264
- US-B1- 6 340 245

## Beschreibung

### Technisches Gebiet

Die Erfindung betrifft ein zahnärztliches Handinstrument gemäß dem Oberbegriff des Anspruchs 1, das der Verbesserung des Arbeitsergebnisses beim ärztlichen Eingriff dient, indem die Freisetzung von Schmiermittel und die Übertragung desselben in den Arbeitsbereich bei gleichzeitiger Wahrung der Betriebssicherheit unterbunden wird.

### Stand der Technik

Im allgemeinen werden zahnärztliche Handinstrumente in vorgegebenen Intervallen geölt, um die bewegten Teile zu schmieren. Aus der DE 19 65 25 35 A1 und der DE 19 65 25 34 A1 ist ein zahnärztliches Handinstrument bekannt, bei welchem die Reibung der darin befindlichen bewegten Bauelemente mit Hilfe des Einsatzes von als Depot vorgesehenen Schmiermitteln unter Zuhilfenahme von aktiven Fördermitteln reduziert wird oder bei dem das Schmiermittel selbsttätig durch Oberflächenspannung oder Kapillarkräfte verteilt wird.

Nachteil ist jeweils, dass das eingesetzte Schmiermittel unter anderem über die Lagerung und über die Aufnahme des Bohrers in den Arbeitsbereich des Bohrers und so in die zu bearbeitende Kavität im Munde des Patienten gelangen kann. Selbst kleinste Mengen an Schmiermittel in einer Zahnkavität haben zur Folge, dass dann die verabreichte Füllung der Kavität nicht mehr zufriedenstellend gewährleistet werden kann, weil unter anderem ihre Haftung in der Kavität eingeschränkt wird.

Dem Stand der Technik folgend ist ein wiederholtes Ölen der Instrumente jedoch zwingend erforderlich. Die Erfahrung zeigt hierbei, dass dies üblicherweise unregelmäßig geschieht, und dann oftmals im Übermaß Öl zugeführt wird, was sich wiederum negativ auf das Betriebsverhalten und die Lebensdauer auswirkt und durch Ölaustritt während des Betriebs als Tropfen, oder Ölnebel auch die Arbeitsqualität negativ beeinflusst.

In der DE 196 12 571 A1 wird für einen Zahnarztbohrer ein käfigloses Wälzlager vorgeschlagen, bei dem zwischen Keramikwälzkörpern einzelne Wälzkörper aus Plastik angeordnet sind, die mit einem Schmierstoff getränkt sind, Schmierstoff abgeben und/oder aus selbstschmierendem Werkstoff bestehen. Als Werkstoff für die Wälzkörper aus Plastik wird PTFE vorgeschlagen. Nachteilig ist hier, dass der Wälzkörper selbst bei dem beschriebenen Anwendungsfall in einem zahnärztlichen Instrument ein nichttragendes Teil ist, dessen Tragfunktion von den anderen Wälzkörpern übernommen werden muss. Es handelt sich somit um ein zusätzliches Bauteil ohne eigene Führungseigenschaften und ohne eigene wesentliche Kraftübertragungsmöglichkeit für das Lager selbst, insbesondere dann, wenn ein gewisser Verschleiß am Wälzkörper selbst eingetreten ist. Es ist weiterhin nicht bekannt, dass derartige Lager in dem angegebenen Drehzahlbereich tatsächlich verwendet werden.

Aus der WO 99/14512 ist ein Wälzlager bekannt, bei dem eine mit karbidbildenden Metallatomen gemischte Beschichtung mit diamantartigem Kohlenstoff vorgesehen ist. Diese Beschichtung eignet sich zur Anwendung bei Wälzlagern, die unter trockenen Bedingungen arbeiten oder dann, wenn die Schmierung schlecht ist oder sogar fehlt, da die Beschichtung weder in sich selbst noch von dem Träger abplatzt oder abblättert. Darüber hinaus kann eine metallische Zwischenschicht beispielsweise aus Chrom vorgesehen sein und als Metallkarbid bildendes Element kann beispielsweise Wolfram verwendet werden. Aufgrund der besonderen Verschleißfestigkeit ist ein Ersatz für eine schlechte oder fehlende Schmierung nicht vorgesehen.

Aus der Beschichtungstechnik sind Verfahren bekannt, mit deren Hilfe Körper beschichtet werden können. Ein derart beschichteter Grundkörper und ein beschichteter oder unbeschichteter Gegenkörper werden im Trockenlauf relativ zueinander bewegt, wodurch Material vom beschichteten Grundkörper auf den nicht beschichteten Gegenkörper übertragen wird und beide Wälzflächen unter anderem durch diese Bewegung eingeglättet werden.

Aus der US 2002/0142264 ist ein Wälzlager bekannt, bei dem eine Silberbeschichtung vorgesehen ist, die mit einem Schmiermittel imprägniert ist.

Die Aufgabe der Erfindung besteht darin, ein zahnärztliches Handinstrument bereitzustellen, bei welchem die darin enthaltenen bewegten Bauelemente bei üblichen hohen Drehzahlen unter Sicherstellung einer geringen Abwärme und unter Sicherstellung einer hohen Laufruhe und unter Beibehaltung der bisherigen Lebensdauer ohne die Gefahr des Austritts von Öl betrieben werden können und das die geschilderten Nachteile des Stands der Technik vermeidet.

### Darstellung der Erfindung

Diese Aufgabe wird erfindungsgemäß durch Anspruch 1 gelöst. Vorteilhafte Ausgestaltungen ergeben sich aus den Unteransprüchen.

Mit Hilfe der erfindungsgemäßen Merkmale aus Anspruch 1, bei denen mindestens eines der Teile eine zumindest teilflächige Beschichtung mit einem Schmierstoff aufweist wird ein Handinstrument geschaffen, welches ohne von außen zugeführte Schmiermittel auskommt.

Unter "Schmiermaterial" werden im folgenden undifferenziert alle Materialien verstanden, welche eine schmierende Wirkung aufweisen. Darunter sind unter anderem Wirkungen zu verstehen, welche verschleißmindernd sind und/oder die Reibung herabsetzen und/oder die Oberflächeneigenschaften gezielt beeinflussen.

Unter "Schmiermittel" werden im folgenden solche Schmiermaterialien verstanden, die nicht im Feststoff gebunden sind, wie beispielsweise Öle oder Fette.

Unter "Schmierstoff" werden im weiteren Schmiermaterialien verstanden, die in einem Feststoff gebunden sind. Diese Schmierstoffe können auch selbst Schmierstoffe freisetzen.

Auch die Beschichtung selbst, die mit dem Grundmaterial fest verbunden ist oder auch noch mindestens eine Zwischenschicht, z.B. als Trägerschicht, aufweist, kann als Schmierstoff verstanden werden. In diesem Fall ruft die Beschichtung an den bewegten Teilen Eigenschaften hervor, die in ihrer Wirkung einem Schmiermaterial zugeordnet sind. Die Beschichtung wirkt also selbst verschleißmindernd.

Im Fall einer selbst Schmierstoff abgebenden Beschichtung soll vorzugsweise die abgegebene Menge so gering sein, dass sie, selbst bei teilweiser Zerstäubung bzw. Pulverisierung, keinen negativen Einfluß auf das Arbeitsergebnis ausübt. Dies hat den Vorteil, dass der Schmierstoff nur an den Stellen vorliegt, an welchen Reibvorgänge stattfinden.

Als Teile kommen insbesondere Gruppen aus Wälzlagern oder Gleitlagern und/oder Getriebeteilen und/oder Zahnrädern und/oder Wellen und/oder Kupplungen in Frage.

Mit Hilfe einer solchen Feststoffschmierung kann das Öl als Schmiermittel ersetzt werden, um somit ein ölfreies Konzept im gesamten Handinstrumentsystem umzusetzen.

Schmiermaterial ist generell immer dort nötig, wo es gilt, Reibung oder Verschleiß zu verringern und/oder Oberflächeneigenschaften gezielt einzustellen. Der Betreiber muß das erfindungsgemäße Handinstrument nicht mehr periodisch schmieren, wodurch auch Pflegefehler während der Wartung, verhindert werden können. Außerdem wird die innere und äußere Verschmutzung der Instrumente mit Schmiermittel verhindert. Bei der Behandlung selbst wird der Vorteil erzielt, dass am Instrument kein Schmiermittel austritt und damit auch nicht in die zu behandelnde Kavität des Patienten gelangen kann. Dieses Konzept bezieht sich auf Handinstrumente, welche mit Luft angetrieben sind ebenso wie auf Handinstrumente, die mit Hilfe eines Motors, insbesondere eines Elektromotors angetrieben werden.

Eine besondere Hürde lag in der Gewinnung von Erkenntnissen betreffend des Verhaltens kleinster Bauteile unter den spezifischen Belastungen, wie sie im Handinstrument herrschen. Die Erfahrung betreffend des Verhaltens von Beschichtungen, wie sie zur Zeit im klassischen Maschinenbau, insbesondere in der Werkstoffkunde und Beschichtungstechnik Gegenstand der Forschung sind, kann aufgrund physikalischer und metallurgischer Effekte nicht linear auf immer kleinere Bauelemente übertragen werden. Vielmehr nehmen mit zunehmender Verkleinerung der Einfluß der Beanspruchung durch z.B. statische Belastungen ab und der Einfluß z.B. von Toleranzen, O-berflächenfinish, Kristall- und Gefügestrukturen, metallurgischen Diffusionsvorgängen etc. zu.

Darüber hinaus treten noch die für zahnärztliche Handinstrumente typischen Belastungen hinzu, wie z.B. Umdrehungen von 667 1/s (40.000 1/min) bis je nach Einsatzzweck über 6.667 1/s (400.000 1/min), die zum Teil über mehrere Getriebestufen mit einem Gesamtübersetzungsverhältnis in der Größenordnung von ca. 1:5 erreicht werden können, und darüber hinaus eine möglichst hohe Laufruhe und eine geringe Wärmeentwicklung gefordert wird, wobei schließlich noch die Sterilisierbarkeit gewährleistet sein muss.

Es ist ausreichend, wenn nur ein Bauteil eine Beschichtung aufweist, solange eine Schmierung aufgrund des in der Beschichtung vorgesehenen Schmierstoffs erfolgt, wobei der Schmierstoff auch an der Beschichtung verbleiben kann und dann eine Übertragung auf das unbeschichtete Teil nicht erfolgt.

Wird gemäß einer ersten Weiterbildung durch den Eingriff eines beschichteten Bauteils mit einem unbeschichteten Bauteil von dem beschichteten Bauteil an das unbeschichtete Bauteil Beschichtungsmaterial und mit dem Beschichtungsmaterial zugleich der in diesem gebundene Schmierstoff übertragen, bringt dies den Vorteil mit sich, dass bereits in der Fertigung beschichtete Bauteile mit unbeschichteten Bauteilen kombiniert verbaut werden können. Nach einer Einlaufphase weisen die betreffenden in Eingriff stehenden Flächen ein Verhalten auf, als wie von vorne herein bereits beschichtete Flächen.

Vorteilhafterweise ist dann, wenn mehrere Gruppen von relativ zueinander bewegten Teilen mit dem Erfordernis einer Schmierung vorhanden sind, bei allen Gruppen von relativ zueinander bewegten Teilen jeweils auf mindestens einem der Teile eine Schmierstoff übertragende Beschichtung angebracht, wobei für unterschiedliche Gruppen auch unterschiedliche Beschichtungen vorgesehen sein können. Hierbei ist es nicht nötig, wirklich alle zueinander bewegten Bauteile zu beschichten, so lange nur sichergestellt ist, dass an den Stellen, an welchen die Relativbewegung beim Gleit- oder Wälzvorgang stattfindet, entweder durch die Beschichtung nur eines im Eingriff stehenden Bauteils oder durch Übertragung von Material z.B. durch Abtragungsvorgänge, hinreichend Schmierung vorhanden ist.

Wenn der gebundene Schmierstoff und die unbeschichtete Gegenfläche so ausgebildet sind, dass der Schmierstoff an der Gegenfläche haftet, so ermöglicht die Materialübertragung von dem die Beschichtung tragenden Teil auf das zunächst unbeschichtete Teil eine Glättung beider Oberflächen, wodurch die Betriebstemperatur reduziert und die Laufruhe erhöht wird.

Ein weiterer Vorteil ergibt sich, wenn die Beschichtung von der Seite des zu beschichtenden Bauteils zur freien Oberfläche hin eine unterschiedliche Zusammensetzung aufweist. Hierdurch können unterschiedliche Funktionen eingestellt werden, wie die Haftung der Beschichtung an dem Grundkörper einerseits und ihre Abriebsfestigkeit bezüglich des dazu bewegten Teils andererseits. Darüber hinaus ist die Beschichtung unabhängig von der Geometrie des zu beschichtenden Gegenstands.

Wenn der Schmierstoffanteil an der freien Oberfläche der Beschichtung gegenüber der Seite des zu beschichtenden Bauteils erhöht ist, hat dies den Vorteil, dass der Eingriffspartner besser mit Schmierstoff versorgt wird.

Die Weiterbildung, bei der die Beschichtung wenigstens eine mit der Oberfläche des beschichteten Teils verbundene Trägerschicht und wenigstens eine Schmierstoffschicht umfasst, bringt den Vorteil der gezielten Einstellbarkeit der Haftung der Beschichtung an dem die Beschichtung tragenden Teil mit sich.

Wenn der Schmierstoff aus der Beschichtung ein Festkörperschmierstoff ist, kann sichergestellt werden, dass außerhalb des Betriebs keine Bestandteile freigesetzt werden, die Verunreinigungen verursachen könnten.

Wenn die in die Beschichtung eingelagerten Bestandteile während des Betriebes einen flüssigen Zustand annehmen können, wird vorteilhaft sichergestellt, dass die Schmierung nur im Betrieb und nur lokal erfolgt.

Da erfindungsgemäß die Beschichtung eine metalldotierte, diamantähnliche Kohlenstoffschicht (DLC) umfasst, ist bei gewährleisteter Abriebfestigkeit gleichzeitig eine exzellente Schmierung sichergestellt.

Wenn die Beschichtung eine ein- oder mehrlagige Polymerschicht umfasst, erlaubt dies ein breites Anwendungsspektrum, da das Potential von verwendbaren organischen Verbindungen extrem hoch ist. Von besonderem Interesse sind Polymere, welche einen geringen Reibungskoeffizienten, gute Druck- und zugleich Flexibilitätseigenschaften aufweisen und abriebfest und hart sind. Vor diesem Hintergrund kommt hier beispielsweise PTFE in Frage. Die Oberfläche einer derartigen Polymerschicht ist dann die Arbeitsfläche einer der Gleit- oder Wälzpartner.

Darüber hinaus können die jeweiligen spezifischen Eigenschaften beim Aufbringen mehrerer Materialien, wie Passivierung, Abriebsfestigkeit, Druckstabilität, hohe Gleitwirkung, Schichtdicke, Schichtanzahl usw. einzeln und gezielt eingestellt werden. Durch die Berührung einer Polymerbeschichtung mit einer nicht beschichteten Oberfläche werden die spezifischen Eigenschaften des jeweiligen Polymers mit der Übertragung von Teilen des Polymers auf die zuvor nicht beschichtete Seite des Eingriffspartners mit übertragen. Darüber hinaus spielt die Form des zu beschichtenden Gegenstands keine Rolle für die Beschichtung und ein weiterer Vorteil ist, dass derartige Polymerschichten eine ebene homogene Fläche bilden, die als Gleit- oder Wälzfläche geeignet sind.

Wenn eine Trägerschicht metallisch ist, bringt dies den Vorteil mit sich, die Oberflächenhärte gezielt einstellen zu können. Die Oberflächenhärte des beschichteten Teils kann dabei geringer sein.

Wenn in der Beschichtung darüber hinaus weitere Funktionsschichten vorhanden sind, können die spezifischen Eigenschaften diverser Funktionsschichten miteinander kombiniert werden. Wenn davon eine Schicht z.B. druckstabilisierend wirkt, indem die auf die Beschichtung einwirkende Druckspitzen in den Schichten verteilt werden, verbessert dies die Standfestigkeit und Lebensdauer des betreffenden Bauteils und damit des gesamten Instruments.

Vorteilhafterweise weist die Beschichtung eine innere Dämpfung auf, welche das Laufgeräusch reduziert.

Wenn die Beschichtung einen sich durch Verschleiß ändernden elektrischen Widerstand aufweist, so kann über die Reduktion der Schichtdicke, z.B. durch Abrieb, der qualitative und quantitative Verschleißzustand der Beschichtung anhand einer Widerstandsänderung festgestellt werden.

Wenn die Beschichtung elektrisch isolierend ist, kann über eine Messung des Widerstands festgestellt werden, ob die Baugruppen galvanisch getrennt sind, solange noch ausreichend isolierende Beschichtung vorhanden ist.

Wenn sich die Beschichtung optisch vom Grundmaterial unterscheidet, hat dies den Vorteil, dass der Verschleißzustand durch eine optisch wahrnehmbare Veränderung der Beschichtung erkennbar ist.

Wenn sich die optischen Eigenschaften wie Farbe, Glanzgrad (Spiegeleffekt) oder Farbintensität der Beschichtung durch Verschleiß ändern, bringt dies wiederum den Vorteil mit sich, dass die Intensität des Verschleißes abhängig vom Verschleißort durch optisch wahrnehmbare Veränderung der Beschichtung, wie z.B. Einlaufspuren, erkennbar ist.

Wenn die Beschichtung durch den Einsatz einer Polymerschicht die Oberflächenhärte verringert, wirkt sie dämpfend, was sich vorteilhaft auf die Laufruhe auswirkt. Wenn die Beschichtung aber durch den Einsatz einer Polymerschicht die Oberflächenhärte unverändert lässt, so wird durch die Polymerschicht der Reibungswiderstand reduziert. Wenn die Oberflächenhärte jedoch erhöht wird, kann wiederum die Abtragungsrate der Beschichtung verringert werden, was die Rate vagabundierender Abriebselemente im Handinstrument verringern hilft. Gemeinsamer Vorteil bleibt, dass mit Hilfe der Beschichtungen unter anderem die Laufeigenschaften und Abriebseigenschaften eingestellt werden können.

Vorteilhafterweise ist mindestens ein Bauteil eines Wälz- oder Gleitlagers bzw. zumindest ein Gleitpartner und/oder Berührungspartner und/oder Kontaktpartner im Gesamtsystem mit einer entsprechenden Beschichtung versehen, so dass hierdurch eine Schmierung sichergestellt ist. So können bei einem Kugellager beispielsweise Innenring und/oder Außenring und/oder der Kugelkäfig und/oder die Kugeln beschichtet sein. Wenn nur jeweils eines der zueinander bewegten Teile beschichtet wird, kann dies die Fertigungskosten reduzieren und ermöglicht über die Materialübertragung an das unbeschichtete Teil eine insgesamt gesehen besonders dünne Funktionsschicht.

Wenn ein zusätzliches erstes ungebundenes Schmiermittel, dies entspricht einem zweiten Schmiermaterial, wie Fett oder Öl, oder Zusatzstoffe mit vergleichbarer Wirkung ausschließlich an den in Kontakt befindlichen Oberflächen der Teile vorgesehen wird, kann ein zusätzlicher Schmiereffekt mit den sich daraus ergebenden weiteren Vorteilen, wie z.B. der Verbesserung der Laufruhe erreicht werden. Im Falle einer solchen Kombination von Schmiermaterialien kann das Verhalten des Gesamtsystems auf unterschiedlichste Benutzerbedürfnisse eingestellt werden.

Wenn das zusätzliche ungebundene Schmiermittel hohe Adhäsions- und Kohäsionskräfte aufweist, kann verhindert werden, dass es sich von den zusätzlich geschmierten Flächen wegbewegt und im Handinstrument oder im Arbeitsbereich des Werkzeug vagabundiert, wobei hierbei die Adhäsionskräfte in erster Linie für die Bindung zwischen zwei Materialien dienen und die Kohäsionskräfte für den inneren Zusammenhalt des Stoffs. Wenn beide einen hohen Wert aufweisen, ist gewährleistet, dass das Schmiermittel seine Wirkung punktgenau entfalten kann. Hierdurch kann insbesondere gewährleistet werden, dass ein derartiges Schmiermittel einmalig bei der Produktion appliziert wird und während der Produktlebenszeit nicht mehr aufgebracht werden muß.

Wenn zu dem bereits zugegebenen zusätzlichen ersten Schmiermittel noch ein weiteres ungebundenes zweites Schmiermittel, entspricht einem dritten Schmiermaterial, eingebracht wird, wie z.B. Öl zusätzlich zu Schmierfett z.B. auf der Zahnflanke oder im Lager, kann das Betriebsverhalten mit weiteren Parametern eingestellt werden. So können hierdurch z.B. die Reibung und damit die Betriebstemperatur noch weiter reduziert werden und die Laufruhe kann weiter erhöht werden.

Wenn der gebundene Schmierstoff als Träger für das weitere ungebundene Schmiermittel ausgebildet ist, kann ein Zusammenwirken der ergänzenden Eigenschaften der jeweiligen Stoffe sichergestellt werden.

Besonders vorteilhaft ist es, wenn die Beschichtung sterilisierbar ist und/oder wenn das oder die weiteren Schmiermaterialien sterilisierbar sind. Dadurch lässt sich die im Bereich der Medizin geforderte Keimfreiheit durch Sterilisation erreichen.

Wenn der Schmierstoff der Beschichtung und das weitere Schmiermittel so ausgewählt sind, dass sie zu einem Schmiermittel nach dem Stand der Technik kompatibel sind, führt auch die herkömmliche Pflege und Schmierung mit Öl nicht zu einem Verlust der Eigenschaften der Beschichtung.

Wenn der Schmierstoff aus mehreren Schichten besteht, ist ein Gleit- und Schmiereffekt auch zwischen den Schichten des Schmierstoffs gewährleistet, so dass die Schmierfähigkeit erhöht wird.

### Kurzbeschreibung der Zeichnungen

In den Zeichnungen sind Ausführungsbeispiele dargestellt. Es zeigt die
- Fig. 1: ein Kopfgehäuse einer zahnärztlichen Turbine im Längsschnitt, die
- Fig. 2: ein zahnärztliches Handinstrument mit Welle und Getriebe, teilweise im Längsschnitt, die
- Fig. 3: den Aufbau einer multifunktionellen Hybrid- schicht, die
- Fig. 4a,b: einen Schnitt durch erfindungsgemäß gestaltete Lagermittel und die
- Fig. 5: eine Kupplung zur Verbindung eines Handinstru- ments mit einer Antriebseinheit.

### Ausführungsbeispiel

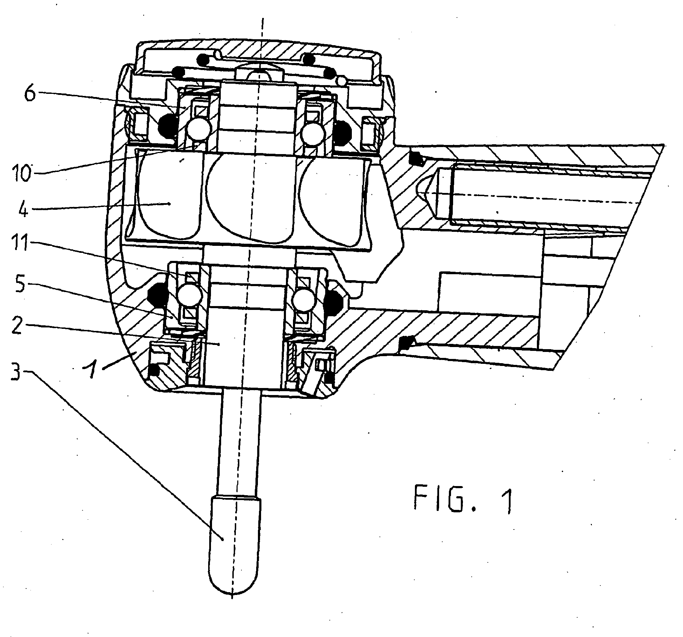

In Fig. 1 ist der vordere Teil eines zahnärztlichen Handinstruments dargestellt. Die Abbildung zeigt in einer Schnittdarstellung den vorderen Teil eines zahnärztlichen Turbinenhandstückes mit einem Kopfgehäuse 1, in dem in bekannter Weise eine Rotorwelle 2 mit einem Rotor 4 für ein anzutreibendes Werkzeug 3 mittels Wälzlager 5, 6 gelagert ist. Die Wälzkörper, hier Kugeln werden durch einen Kugelkäfig 10, 11 auf Abstand gehalten.

In diesem Turbinenhandstück kommen insbesondere die Lagerungen 5,6 und/oder die Käfige 10, 11 für eine Beschichtung in Frage.

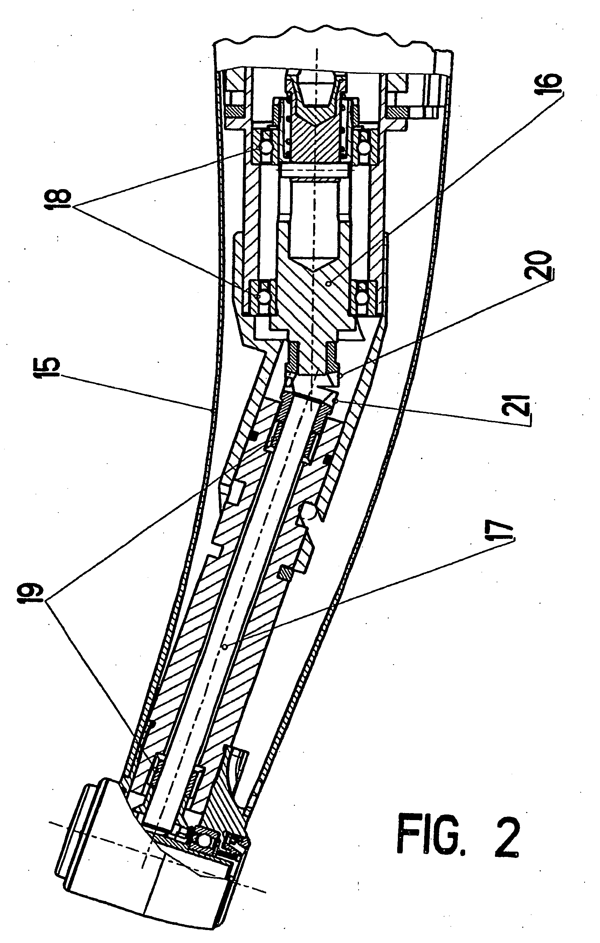

Die Fig. 2 zeigt einen Ausschnitt eines zahnärztlichen Handstückes, bei dem im Innern einer Griffhülse 15 zwei Triebwellenabschnitte 16, 17 gelagert sind. Zur Lagerung sind mehrere zumindest teilweise beschichtete Wälzlager 18, hier ausgeführt als Kugellager 18 und Gleitlager 19, vorgesehen. Die Verzahnung eines Getriebes besteht aus zwei zumindest teilweise beschichteten Zahnrädern 20, 21.

Die zumindest teilweise beschichteten Wälzlager 18 bzw. Gleitlager 19 einerseits und die zumindest teilweise beschichtete Getriebeverzahnung der Zahnräder 20, 21 andererseits können mit einem weiteren Schmiermittel geschmiert werden. Die Wälzlager können aber auch ganz durch Gleitlager ersetzt werden, wobei in diesem Fall eine entsprechende Beschichtung vorgesehen sein kann.

Die zumindest teilweise beschichteten Zahnräder 20 und 21 greifen ineinander und bedürfen der Schmierung.

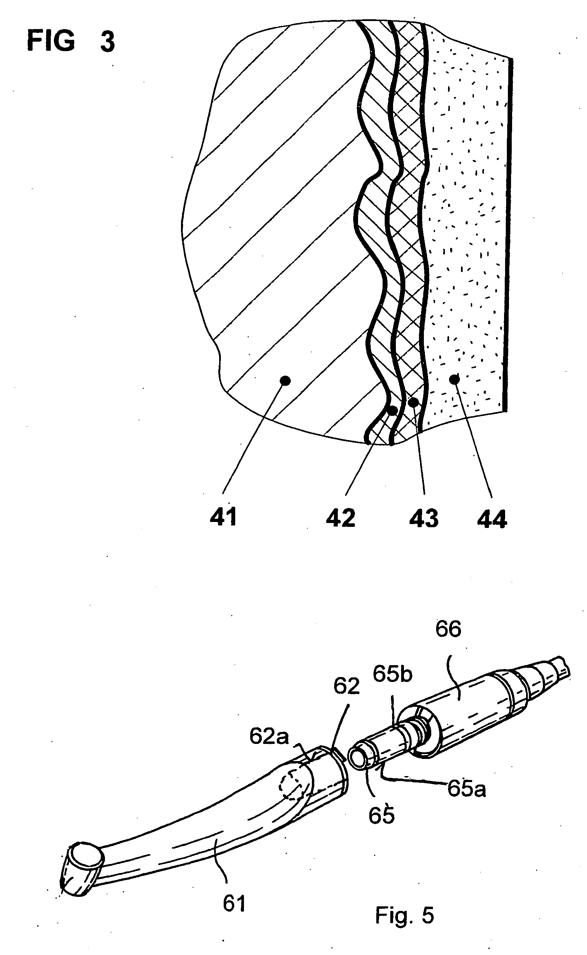

Der Aufbau einer multifunktionellen Hybridpolymerschicht als erste Variante des Aufbaus einer Beschichtung ist in Fig. 3 dargestellt.

Auf die Oberfläche des Grundkörpers 41 ist eine Passivierungsschicht 42 aufgebracht. Darüber ist eine druckstabilisierende Schicht 43, auf welcher wiederum eine polymere Schicht 44 als Funktionsschicht aufgebracht ist. Die Schichten sind überhöht dargestellt und die gesamte Schichtdicke beträgt 1 -10 µm.

Die Vorteile einer Hybridpolymerschicht bestehen darin, dass jede Schicht eine bestimmte Funktion erfüllen kann, wie z.B. Passivierung, Abriebfestigkeit, Druckstabilität, hohe Gleitwirkung usw. Die Beschichtung ist auch in diesem Fall unabhängig von der Form des zu beschichteten Gegenstands und die Schichtdicke und Anzahl der Schichten sind individuell einstellbar. Die Polymere bilden dabei ebene, homogene Flächen.

Die Polymerschicht kann in ihrem eigenen inneren Aufbau aus diversen Lagen des selben Materials bestehen. Diese Lagen können idealerweise über Gleitvorgänge zwischen diesen Lagen die Schmierung unterstützen. Darüber hinaus kann in dem Polymer gebundener Schmierstoff eingelagert sein und es kann außerdem noch ungebundenes Schmiermaterial, z.B. bei der Montage, appliziert sein. Über das Zusammenwirken der einzelnen Schichten kann die Schmierfähigkeit präzise eingestellt werden.

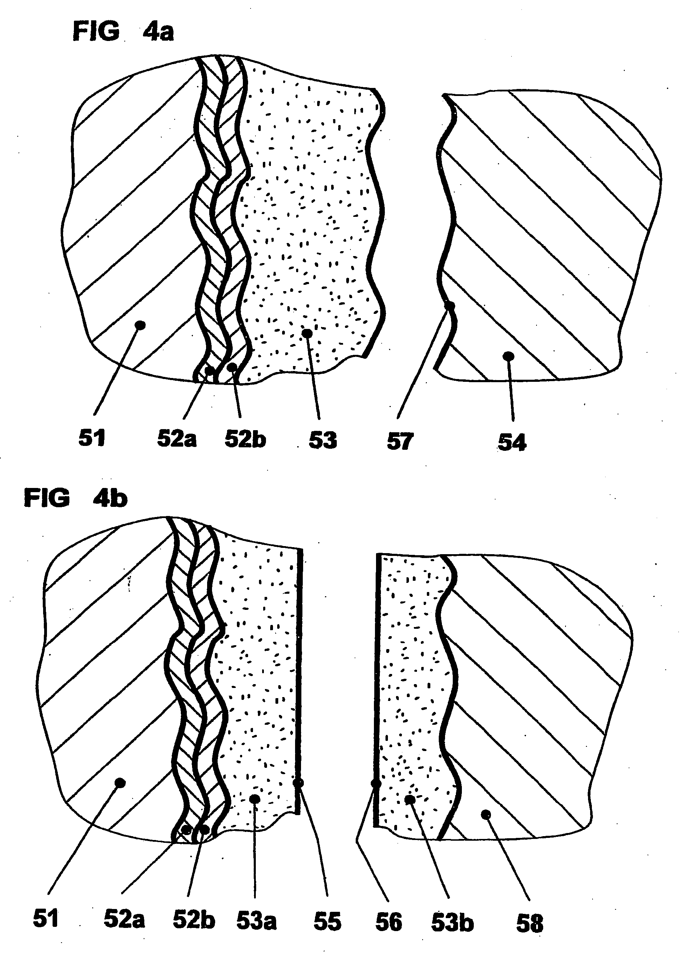

Fig. 4a zeigt einen Grundkörper 51, der einmal mit einer Übergangs- 52a und einer Stützschicht 52b versehen ist, auf welchen wiederum eine den Schmierstoff enthaltende oder bildende Funktionsschicht 53 aufgebracht ist. Die Übergangsschicht 52a stellt die Verbindung zu dem Grundkörper 51 her, die Stützschicht 52b ermöglicht einen Druckausgleich. Alternativ können auch nur eine oder mehr als zwei Schichten 52a, 52b eingesetzt werden. Auf dem der Funktionsschicht 53 gegenüber liegenden Körper 54 ist weder eine Träger- noch eine Funktionsschicht angebracht.

Durch den Wälzprozess und die sich hierbei ereignenden Vorgänge ergeben sich in der Beschichtungsverteilung Änderungen, wie sie in Figur 4b dargestellt sind. Durch den Wälzvorgang wird Material aus der Funktionsschicht 53 an den gegenüberliegenden Körper 58 übertragen und lagert sich dort als Funktionsschicht 53b ab. Weiterhin stellen sich beidseitig geglättete Wälzflächen 55, 56 auf der Funktionsschicht 53a des Grundkörpers 51 bzw. auf der Funktionsschicht 53b ein.

Bei der Funktionsschicht 53 der Erfindung handelt es sich um eine metalldotierte DLC-Schicht. Diese z.B. dem Verschleißschutz dienenden Schichten verhindern den Kontakt zwischen den unmittelbaren Wälzpartnern nämlich den Grundkörpern 51,54. Die Eigenschaften der gesamten Funktionsschicht ist insbesondere über ihre Schichten, wie z.B. die Einzelschichten 52a und 52b, individuell einstellbar. Die Funktionsschicht 53 weist im Fall einer ersten untersuchten Variante einer solchen Schicht einen Reibkoeffizienten von 0,03 auf.

Darüber weist die Funktionsschicht 53 als Schmierstoff, hier als Trockenschmierschicht, die Merkmale auf, dass sie aus modifiziertem Wolfram-Disulfid in lamellarer Form besteht, dass sie eine molekulare Bindung und hierdurch gleichzeitig eine physikalische Verbindung mit dem Trägermaterial eingeht. Hierdurch ist letztlich eine über die gesamte Abwälzstrecke ausgeprägte Schutzschicht vorhanden, die darüber hinaus nicht toxisch oder korrosiv wirkt und vor allem kompatibel zu Ölen, Fetten, Lösungsmittel, Benzin u. Alkohol ist.

Bei einer auch als WC/C bezeichneten untersuchte zweiten Ausführungsform einer solchen Oberflächenbeschichtung mit einer metalldotierten DLC-Schicht handelt es sich um eine Hartstoffschicht mit Trockenschmiereigenschaft, deren Härte bei ca. 1000 HV liegt. Der Schichtaufbau umfasst eine Chromzwischenschicht und mehrere lamellar angeordnete WC/C-Schichten. Insgesamt liegt eine gute Kohäsionseigenschaft der Schichten vor. Bei einer gesamten Schichtdicke von 1 - 4 µm liegt darüber hinaus eine sehr gute Adhäsionseigenschaft vor. Eine derartige Schicht weist eine Temperaturbeständigkeit von 300°C, sowie einen theoretischen Reibungskoeffizient von 0,2 bei einer gleichmäßig glatten Oberflächenstruktur auf.

Je nach Einstellung kann die Gleitebene der Schmierung durch den gebundenen Schmierstoff oder durch die ungebundenen Schmiermittel definiert sein.

Die Funktionsschicht der Fig. 3, 4a, 4b wird in der vorliegende Beschreibung als "Schmierstoff" aufgefasst, obwohl es sich, wie oben dargestellt, auch um sehr harte Schichten handeln kann. Wesentlich ist hier, dass mit der Funktionsschicht die schmierungstypischen Eigenschaften, und hier insbesondere die Verschleißminderung, an den zueinander bewegten Teilen erzielt werden. Daher wird auch dann der Begriff "Schmierung" verwendet, wenn es sich um eine Übertragung einzelner Partikel aus einer Schicht und die Anlagerung dieses Partikels als Schicht oder Teil einer Schicht an dem anderen Teil handelt.

Fig. 5 zeigt ein zahnärztliches Handinstrument 61 mit einer Kupplungsstelle 62 und einem Antrieb 66 mit einer zu der Kupplungsstelle 62 korrespondierenden Kupplungsstelle 65. Die Kontaktstellen 62a und 65a sind im Zuge eines schmierungsfreien Gesamtkonzepts beschichtet. Notwendige Halte- oder Sicherungselemente 65b können zur Erhöhung der Lebensdauer ebenso beschichtet werden.

Von großer Bedeutung für die vorliegende Erfindung ist, dass ausschließlich bereits bestehende kraftübertragende Bauteile für die Bereitstellung des Schmierstoffes verwendet werden, ohne dass zusätzliche Bauteile erforderlich sind. Dabei ist stets eine Belastungen ausgesetzte Arbeitsfläche mit der Beschichtung versehen, beispielsweise bei einem Wälzlager der Innenring, der Außenring und/oder der Käfig, bei einem Gleitlager die Welle oder die Buchse, bei einem Zahnrad die Zahnflanke. Diese Arbeitsfläche sind gewissermaßen eine Führung für ein einziges benachbartes Bauteil. Ein Wälzkörper hingegen hat Kontakt zu mehreren Bauteilen, nämlich zum Innenring, zum Außenring und gegebenenfalls zu einem Käfig und weist damit mehr als eine Arbeitsfläche auf.

Bei der Übertragung von Schmierstoff werden erfindungsgemäß die Führungseigenschaft des Schmierstoff abgebenden Teils in keiner praktisch relevanten Weise beeinträchtigt. Dies ist insbesondere dann gewährleistet, wenn die Schmierstoff abgebende Beschichtung höchstens 10 µm dick ist, vorzugsweise zwischen 1 bis 4 µm.

## Patentansprüche

1. Zahnärztliches Handinstrument mit zueinander bewegten Teilen, wobei die Teile in Oberflächenkontakt zueinander stehen, weiterhin umfassend ein Schmiermaterial zum Schmieren dieser Teile, wobei mindestens eines der Teile eine zumindest teilflächige Beschichtung (52, 53) mit einem Schmierstoff aufweist wobei der Schmierstoff so ausgebildet ist, dass er bei der Bewegung der Teile von dem die Beschichtung tragenden Teil an das unbeschichtete Teil übertragen wird und der Schmierstoff und die Gegenfläche (57) des unbeschichteten Teils (54) so ausgebildet sind, dass der Schmierstoff an der Gegenfläche des unbeschichteten Teils (54) haftet und der Schmierstoff aus der Beschichtung (53, 44) ein Festkörperschmierstoff ist, **dadurch gekennzeichnet, dass** die Beschichtung (53, 44) eine metalldotierte, diamantähnliche Kohlenstoffschicht DLC umfasst.

2. Zahnärztliches Handinstrument nach Anspruch 1, **dadurch gekennzeichnet, dass** mehrere Gruppen von relativ zueinander bewegten Teilen mit dem Erfordernis einer Schmierung vorhanden sind und dass bei allen Gruppen von relativ zueinander bewegten Teilen jeweils auf mindestens einem der Teile eine Schmierstoff übertragende Beschichtung angebracht ist, wobei für unterschiedliche Gruppen auch unterschiedliche Beschichtungen vorgesehen sein können.

3. Zahnärztliches Handinstrument nach Anspruch 1 oder 2, **dadurch gekennzeichnet, dass** die Beschichtung wenigstens eine mit der Oberfläche des beschichteten Teils verbundene Trägerschicht (52a, 42) und wenigstens eine Schmierstoffschicht (53, 43, 44) umfasst.

4. Zahnärztliches Handinstrument nach einem der Ansprüche 1 bis 3, in der gesamten Beschichtung weitere Funktionsschichten (52a, 52b, 42, 43) vorhanden sind, von denen eine druckstabilisierend ist.

5. Zahnärztliches Handinstrument nach Anspruch 4, **dadurch gekennzeichnet, dass** sich der elektrische Widerstand der Beschichtung durch Verschleiß ändert.

6. Zahnärztliches Handinstrument nach Anspruch 4 oder 5, **dadurch gekennzeichnet, dass** eine der mehreren Schichten elektrisch isolierend wirken.

7. Zahnärztliches Handinstrument nach einem der Ansprüche 4 bis 6, **dadurch gekennzeichnet, dass** sich die Beschichtung optisch vom Grundmaterial (51, 41) unterscheidet.

8. Zahnärztliches Instrument nach Anspruch 7, **dadurch gekennzeichnet, dass** sich die optischen Eigenschaften der Beschichtung durch Verschleiß ändert.

9. Zahnärztliches Handinstrument nach einem der Ansprüche 1 bis 8, ein zusätzliches Schmiermittel ausschließlich an den in Kontakt befindlichen Oberflächen der Teile vorgesehen ist, das hohe Adhäsions- und Kohäsionskräfte aufweist.

10. Zahnärztliches Handinstrument nach Anspruch 9, **dadurch gekennzeichnet, dass** ein weiteres, zweites ungebundenes Schmiermittel vorhanden ist.

11. Zahnärztliches Handinstrument nach Anspruch 9 oder 11, **dadurch gekennzeichnet, dass** der Schmierstoff als Träger für das oder die Schmiermittel ausgebildet ist.

12. Zahnärztliches Handinstrument nach einem der Ansprüche 1 bis 11, **dadurch gekennzeichnet, dass** die Beschichtung und/oder die weiteren Schmiermittel sterilisierbar sind.

## Claims

1. A dental hand instrument having parts that are moved relatively to each other while in surface contact with each other, and also having a lubricating material for lubrication of said parts, at least one of said parts being coated over at least part of its surface (52, 53) with a lubricating substance, said lubricating substance being such that it is transferred from the part carrying said coating to the uncoated part when said parts are in motion, and said lubricating substance and the mating surface (57) of said uncoated part (54) are such that the lubricating substance adheres to the mating surface of said uncoated part (54), and said lubricating substance in said coating (53, 44) is a solid lubricating substance, **characterized in that** said coating (53, 44) comprises a metal-doped, diamond-like carbon (DLC) layer.

2. The dental hand instrument as defined in claim 1, **characterized in that** a plurality of groups of parts that are moved relatively to each other and require lubrication are present and that, for all groups of parts that are moved relatively to each other, at least one of the parts has a coating capable of transferring lubricating substance, while different groups may optionally have different coatings.

3. The dental hand instrument as defined in claim 1 or claim 2, **characterized in that** said coating comprises at least one carrier layer (52a, 42) attached to the surface of said coated part and at least one layer of lubricating substance (53, 43, 44).

4. The dental hand instrument as defined in any one of claims 1 to 3, **characterized in that** in the overall coating there are present further functional layers (52a, 52b, 42, 43), of which one is pressure-resistant.

5. The dental hand instrument as defined in claim 4, **characterized in that** the electrical resistance of said coating varies with wear.

6. The dental hand instrument as defined in claim 4 or claim 5, **characterized in that** one of the plurality of layers has an electrically insulating effect.

7. The dental hand instrument as defined in any one of claims 4 to 6, **characterized in that** said coating differs optically from the carrier material (51, 41).

8. The dental hand instrument as defined in claim 7, **characterized in that** the optical properties of said coating change with wear.

9. The dental hand instrument as defined in any one of claims 1 to 8, **characterized in that** an additional lubricant is provided exclusively on those surfaces of parts which contact each other, which additional lubricant exhibits high adhesion and cohesion forces.

10. The dental hand instrument as defined in claim 9, **characterized in that** a second non-bonded lubricant is present.

11. The dental hand instrument as defined in claim 9 or claim 10, **characterized in that** the lubricating substance is in the form of a carrier for the lubricant or lubricants.

12. The dental hand instrument as defined in any one of claims 1 to 11, **characterized in that** said coating and/or said other lubricants are sterilizable.

## Revendications

1. Instrument dentaire manuel comportant des pièces mobiles les unes par rapport aux autres, les pièces étant en contact surfacique entre elles, comportant en outre une substance lubrifiante pour lubrifier ces pièces, au moins une des pièces présentant au moins sur une partie de sa surface un revêtement (52, 53) pourvu d'un lubrifiant, le lubrifiant étant conçu de manière à ce que, lors du mouvement des pièces, il soit transmis de la pièce portant le revêtement à la pièce non revêtue et le lubrifiant et la surface conjuguée (57) de la pièce non revêtue (54) étant conçus de manière à ce que le lubrifiant adhère à la surface conjuguée de la pièce non revêtue (54) et que le lubrifiant du revêtement (53, 44) soit un lubrifiant à corps solide, **caractérisé en ce que** le revêtement (53, 44) comprend une couche de carbone dopée au métal et similaire à du diamant.

2. Instrument dentaire manuel selon la revendication 1, **caractérisé en ce que** plusieurs groupes de pièces en mouvement les unes par rapport aux autres exigeant une lubrification sont présents et que, dans tous les groupes de pièces en mouvement les unes par rapport aux autres, un revêtement transmettant le lubrifiant est appliqué respectivement sur au moins une des pièces, différents revêtements pouvant aussi être prévus pour différents groupes.

3. Instrument dentaire manuel selon la revendication 1 ou 2, **caractérisé en ce que** le revêtement comprend au moins une couche porteuse (52a, 42) reliée à la surface de la pièce revêtue et au moins une couche de lubrifiant (53, 43, 44).

4. Instrument dentaire manuel selon une des revendications 1 à 3, dans l'ensemble du revêtement duquel d'autres couches fonctionnelles (52a, 52b, 42, 43) sont présentes, dont l'une est stabilisatrice de pression.

5. Instrument dentaire manuel selon la revendication 4, **caractérisé en ce que** la résistance électrique du revêtement est modifiée par l'usure.

6. Instrument dentaire manuel selon la revendication 4 ou 5, **caractérisé en ce qu'**une des plusieurs couches a un effet d'isolation électrique.

7. Instrument dentaire manuel selon une des revendications 4 à 6, **caractérisé en ce que** le revêtement se distingue au niveau optique de la matière de base (51, 41).

8. Instrument dentaire manuel selon une la revendication 7, **caractérisé en ce que** les propriétés optiques du revêtement sont modifiées par l'usure.

9. Instrument dentaire manuel selon une des revendications 1 à 8, dans lequel il est prévu exclusivement à la surface se trouvant en contact des pièces un moyen lubrifiant supplémentaire qui présente une force d'adhésion et des forces de cohésion élevées.

10. Instrument dentaire manuel selon une la revendication 9, **caractérisé en ce qu'**un deuxième autre moyen lubrifiant non lié est présent.

11. Instrument dentaire manuel selon une la revendication 9 ou 11, **caractérisé en ce que** le lubrifiant est réalisé sous forme d'un matériau porteur pour le ou les moyens lubrifiants.

12. Instrument dentaire manuel selon une des revendications 1 à 11, **caractérisé en ce que** le revêtement et/ou les autres moyens lubrifiants sont stérilisables.
